(19) Europäisches Patentamt
European Patent Office
Office européen des brevets

(11) **EP 3 952 056 A1**

(12) **EUROPEAN PATENT APPLICATION**
published in accordance with Art. 153(4) EPC

(43) Date of publication:
**09.02.2022 Bulletin 2022/06**

(21) Application number: **19921120.2**

(22) Date of filing: **28.03.2019**

(51) International Patent Classification (IPC):
***H02J 7/35*** *(2006.01)*      ***H02J 7/02*** *(2016.01)*

(52) Cooperative Patent Classification (CPC):
**H02J 7/02; H02J 7/35;** Y02E 10/50; Y02E 70/30

(86) International application number:
**PCT/JP2019/013621**

(87) International publication number:
**WO 2020/194666 (01.10.2020 Gazette 2020/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Tohoku University**
**Sendai-shi, Miyagi 980-8577 (JP)**

(72) Inventor: **SHIRAKATA, Masato**
**Sendai-shi, Miyagi 980-8577 (JP)**

(74) Representative: **Plasseraud IP**
**66, rue de la Chaussée d'Antin**
**75440 Paris Cedex 09 (FR)**

(54) **SOLAR UNIT, SOLAR SYSTEM, METHOD OF CONTROLLING SOLAR UNIT, AND METHOD OF CONTROLLING SOLAR SYSTEM**

(57) This solar unit includes a charging/discharging part in which a solar panel and a power storage battery are connected, two terminals connected to the charging/discharging part, a bypass wiring configured to connect the two terminals, and a switching element located at a connection portion between one of the two terminals and the bypass wiring. The switching element switches between a first current path along which a current flows through the charging/discharging part and a second current path along which a current flows through the bypass wiring while bypassing the charging/discharging part.

FIG. 2

# Description

[Technical Field]

The present invention relates to a solar unit, a solar system, a method of controlling the solar unit, and a method of controlling the solar system.

[Background Art]

Attention is being focused on photovoltaic power generation for renewable energy. Photovoltaic power generation is power generation using natural energy and fluctuations in generated power due to environmental changes are inevitable. A solar panel and a power storage battery may be connected as one means for limiting an influence of fluctuations in generated power. When the solar panel generates power, surplus power is stored in the power storage battery. When the solar panel does not generate power, the power stored in the power storage battery is used.

For example, Patent Literature 1 describes a photovoltaic power generation system having a solar panel and a power storage battery whose charging and discharging are controlled by a control device. The control device controls over-charging and over-discharging of the power storage battery and limits deterioration and thermal runaway of the power storage battery.

[Citation List]

[Patent Literature]

[Patent Literature 1]

Japanese Unexamined Patent Application, First Publication No. 2017-60359

[Summary of Invention]

[Technical Problem]

An amount of power generated by a solar panel varies with an amount of sunshine. For example, a solar panel facing the sun produces a large amount of power, and a solar panel facing the shade produces a small amount of power. When a power storage battery is connected to each of solar panels, an amount of charge with which each power storage battery is charged varies with an environment to which the connected solar panel is exposed. If units each including a solar panel varying with a battery voltage (a charging voltage) of each power storage battery and the power storage battery are connected in series and externally output power, a power storage battery with a small amount of charge may be over-discharged. Also, assuming that an output amount corresponds to that of the power storage battery having a small amount of charge, the output efficiency of the entire solar system decreases. Also, a current that is not externally output is used for recombination of excitons within the solar panel, which causes a decrease in the output efficiency of the entire solar system.

The present invention has been made in view of the above problems and an objective of the present invention is to provide a solar unit, a solar system, a method of controlling the solar unit, and a method of controlling the solar system capable of increasing output efficiency.

[Solution to Problem]

The present inventors have found that the output efficiency of a solar system can be increased by directly connecting a solar panel and a power storage battery and changing a current path in accordance with an amount of charge of the power storage battery. That is, the present invention provides the following means for solving the above problems.

(1) According to a first aspect, there is provided a solar unit including: a charging/discharging part in which a solar panel and a power storage battery are connected; two terminals connected to the charging/discharging part; a bypass wiring configured to connect the two terminals; and a switching element located at a connection portion between one of the two terminals and the bypass wiring, wherein the switching element switches between a first current path along which a current flows through the charging/discharging part and a second current path along which a current flows through the bypass wiring while bypassing the charging/discharging part.

(2) The solar unit according to the above-described aspect may further include a control part connected to the switching element, wherein the control part may measure a value associated with a voltage of the power storage battery and cause the switching element to switch in accordance with the value associated with the voltage of the power storage battery.

(3) In the solar unit according to the above-described aspect, the solar panel and the power storage battery may be directly connected in the charging/discharging part and a maximum discharging voltage of the power storage battery may be less than or equal to a value which is 10% greater than a maximum output operation voltage of the solar panel.

(4) According to a second aspect, there is provided a solar system including: a plurality of solar units according to the above-described aspect, wherein the solar units are connected to each other in series.

(5) According to a third aspect, there is provided a method of controlling a solar system, the method including: providing a plurality of charging/discharging parts in which a solar panel and a power storage battery are connected; and bypassing the charging/discharging parts when an amount of charge of the plurality of charging/discharging parts is less than a specified value.

(6) According to a fourth aspect, there is provided a solar system control method using a solar system including a plurality of solar units according to the above-described aspect or the solar system according to the above-described aspect, the solar system control method including: setting the switching element to a state of the second current path when an amount of charge of the power storage battery is less than a specified value; and setting the switching element to a state of the first current path when the amount of charge of the power storage battery reaches the specified value.

[Advantageous Effects of Invention]

According to the above-described aspects, the solar system can increase output efficiency.

[Brief Description of Drawings]

Fig. 1 is a schematic diagram of a solar system according to the present embodiment.
Fig. 2 is a schematic diagram in which one unit (solar unit) of the solar system according to the present embodiment is enlarged.
Fig. 3 shows I-V characteristics of a solar panel.
Fig. 4 is a schematic diagram for describing an operation of the solar system according to the present embodiment.
Fig. 5 is a schematic diagram for describing an operation of the solar system according to the present embodiment.
Fig. 6 is a schematic diagram for describing an operation of a solar system according to a comparative example.
Fig. 7 is an equivalent circuit diagram of the solar panel.
Fig. 8 is a schematic diagram in which one unit of a solar system according to a first modified example is enlarged.

[Description of Embodiments]

Hereinafter, the present embodiment will be described in detail with reference to the drawings as appropriate. Enlarged parts with features of the present invention may be shown in the drawings used in the following description for convenience so that the features of the present invention are easily understood. Dimension ratios and the like of each component may be different from actual data. Materials, dimensions, and the like exemplified in the following description are examples, the present invention is not limited thereto, and modifications can be appropriately made without departing from the spirit and scope of the present invention.

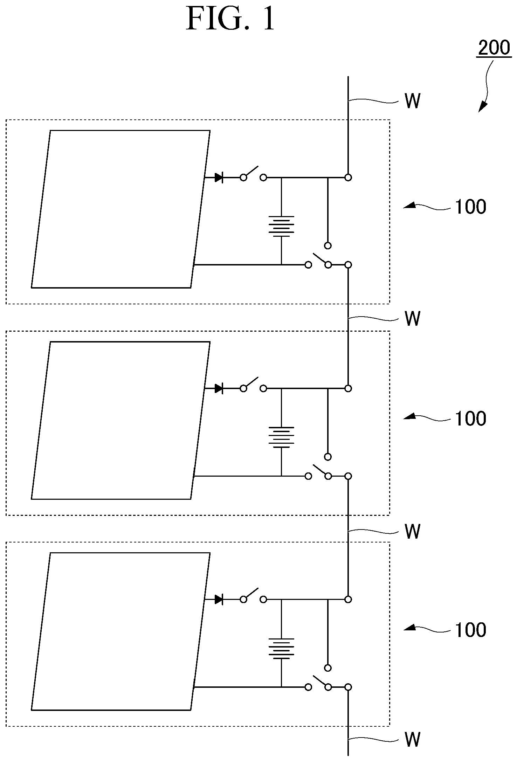

Fig. 1 is a schematic diagram of a solar system 200 according to the present embodiment. The solar system 200 includes a plurality of units (solar units) 100. The plurality of units 100 are connected to each other in series by wiring w.

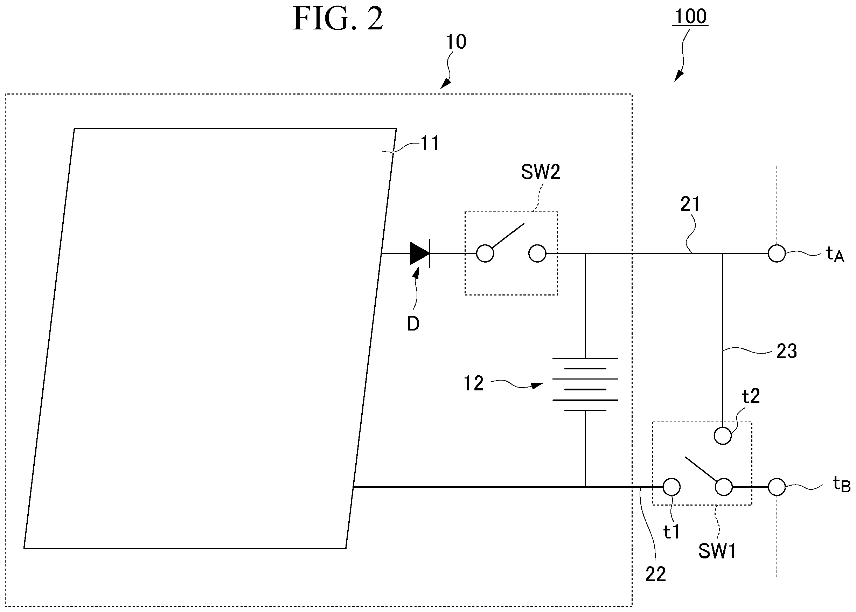

Fig. 2 is a schematic diagram in which one unit 100 of the solar system 200 according to the present embodiment is enlarged. The unit 100 includes a charging/discharging part 10, a first wiring 21, a second wiring 22, a bypass wiring 23, and a switching element SW1.

The first wiring 21 connects a first terminal $t_A$ and the charging/discharging part 10. The second wiring 22 connects a second terminal $t_B$ and the charging/discharging part 10. The first terminal $t_A$ and the second terminal $t_B$ are connected to the adjacent unit 100 or the outside by the wiring w (see Fig. 1). The bypass wiring 23 connects the first wiring 21 and the second wiring 22.

The switching element SW1 is located at a connection point between the second wiring 22 and the bypass wiring 23. The switching element SW1 may be located at a connection point between the first wiring 21 and the bypass wiring 23. The switching element SW1 is connected to either one of two connection terminals t1 and t2. When the switching element SW1 is connected to the connection terminal t1, the charging/discharging part 10 and the second terminal $t_B$ are connected. When the switching element SW1 is connected to the connection terminal t1, a current flows through the charging/discharging part 10. A current path connecting the first terminal $t_A$ and the second terminal $t_B$ via the charging/discharging part 10 is referred to as a first current path. When the switching element SW1 is connected to the connection terminal t2, the bypass wiring 23 and the second terminal $t_B$ are connected. When the switching element SW1 is connected to the connection terminal t2, the current bypasses the charging/discharging part 10 and flows through the bypass wiring 23. The current path connecting the first terminal $t_A$ and the second terminal $t_B$ via the bypass wiring 23 is referred to as a second current path. The switching element SW1 switches between the first current path and the second current path.

The charging/discharging part 10 includes a solar panel 11, a power storage battery 12, a diode D, and a switching element SW2.

The diode D is provided, for example, between the solar panel 11 and the first terminal $t_A$. The diode D prevents a back flow of a current from the solar panel 11. The switching element SW2 is located between the solar panel 11 and the power storage battery 12. The switching element SW2 makes a connection or a disconnection between the first terminal $t_A$ and the solar panel 11.

The solar panel 11 includes one or more cells. Each cell has an output voltage of about 1 V (about 0.8 V for crystalline silicon). If a plurality of cells are connected in series, the solar panel 11 exhibits a high output voltage.

The power storage battery 12 includes one or more cells (power storage elements). The voltage of one cell is, for example, 3.0 V or more and 4.2 V or less. A maximum charging voltage $V_{max}$ of the power storage battery 12 is a value obtained by summing the voltages of the cells constituting the power storage battery 12. When a plurality of cells are connected in series, the maximum charging voltage $V_{max}$ with which the power storage battery 12 can be charged increases.

The power storage battery 12 is, for example, a lithium-ion secondary battery. Each cell constituting the power storage battery 12 includes a cathode, an anode, and a separator. The number of layers of the cathode and the anode in each cell is not particularly limited.

The cathode includes a cathode current collector and a cathode active substance formed on at least one surface of the cathode current collector. The cathode current collector is a conductor, for example, aluminum. The cathode active substance has, for example, a crystal structure of any one of a spinel structure, an olivine structure, and a perovskite structure. The cathode active substance is, for example, $LiMnO_4$, $LiMn_{1.5}Ni_{0.5}O_4$, $LiFePO_4$, or $LiMnPO_4$. The spinel structure, the olivine structure, and the perovskite structure maintain their crystal structures and are stable even if ions (for example, lithium ions) that contribute to charging and discharging are removed. The cathode active substance having the above crystal structures is not easily broken even if the number of supplied ions fluctuates significantly in accordance with a difference in the amount of sunshine.

The anode includes an anode current collector and an anode active substance formed on at least one surface of the anode current collector. The anode current collector is a conductor, for example, aluminum, copper, or nickel. As the anode active substance, a known active substance can be used. Also, the anode active substance preferably contains a substance whose crystal structure is maintained in a state in which ions contributing to charge/discharge are removed. As the anode active substance, for example, graphite, lithium titanium oxide having a spinel structure ($Li_4Ti_5O_{12}$: LTO) and lithium vanadium oxide ($LiVO_2$ or $Li_{1.1}V_{0.9}O_2$) are preferable.

The separator is sandwiched between the cathode and the anode. A known separator can be used as the separator. The separator is, for example, a polyolefin such as polyethylene or polypropylene or a film such as cellulose, polyester, polyacrylonitrile, or polyamide.

The solar panel 11 and the power storage battery 12 are directly connected. The solar panel 11 and the power storage battery 12 may be connected in a one-to-one relationship or in a one-to-many relationship. The term "directly connected" means that there is no control circuit for controlling operations of the solar panel 11 and the power storage battery 12. When the solar panel 11 and the power storage battery 12 are directly connected, the solar panel 11 is controlled by a voltage of the power storage battery 12. An operating voltage of the solar panel 11 depends on a voltage of the power storage battery 12.

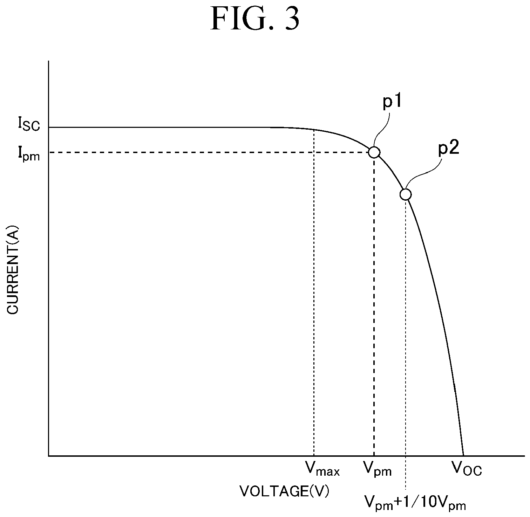

Fig. 3 is a graph showing I-V characteristics of the solar panel 11. Regarding the I-V characteristics of the solar panel 11, the current shows characteristics of dropping as the voltage increases. $I_{sc}$ denotes a short-circuit current and $V_{oc}$ denotes an open-circuit voltage. p1 denotes an optimum operating point. The optimum operating point p1 indicates a combination of an output voltage and an output current of the solar panel 11 when the solar panel 11 shows a maximum output. A voltage at the optimum operating point p1 is referred to as a maximum output operating voltage $V_{pm}$ and a current at the optimum operating point p1 is referred to as a maximum output operating current $I_{pm}$. The output of the solar panel 11 becomes a maximum when the solar panel 11 operates at the optimum operating point p1.

A maximum charging voltage $V_{max}$ of the power storage battery 12 is set to be less than or equal to a value which is 10% greater than the maximum output operating voltage $V_{pm}$ of the solar panel 11, and is preferably set to be less than or equal to the maximum output operating voltage $V_{pm}$ of the solar panel 11. The value, which is 10% greater than the maximum output operating voltage $V_{pm}$, is a voltage at an operating point p2 in Fig. 3. It is assumed that the maximum output operating voltage $V_{pm}$ is in a standard state specified in the "crystalline solar cell module output measurement method" of the JIS standard (JIS C 8914). In Fig. 3, an example of a positional relationship between the maximum charging voltage $V_{max}$ and the maximum output operating voltage $V_{pm}$ of the power storage battery 12 in the I-V characteristics of the solar panel 11 is shown.

The maximum charging voltage $V_{max}$ of the power storage battery 12 can be set according to the number of connections of cells constituting the power storage battery 12. For example, it can be assumed that, when the charging voltage of the single cell constituting the power storage battery 12 is 4.1 V and the maximum output operating voltage $V_{pm}$ is 20 V, the number of cells constituting the power storage battery 12 is four (a maximum charging voltage is 16.4 V).

Also, the maximum charging voltage $V_{max}$ of the power storage battery 12 may be set in relation to the open-circuit voltage $V_{oc}$ of the solar panel 11. For example, the open-circuit voltage $V_{oc}$ of the solar panel 11 is preferably set to 100% or more and 300% or less of the maximum charging voltage $V_{max}$ of the power storage battery 12, more preferably set to 120% or more and 300% or less thereof, further more preferably set to 120% or more and 200% or less thereof, and particularly preferably set to 130% or more and 160% or less thereof.

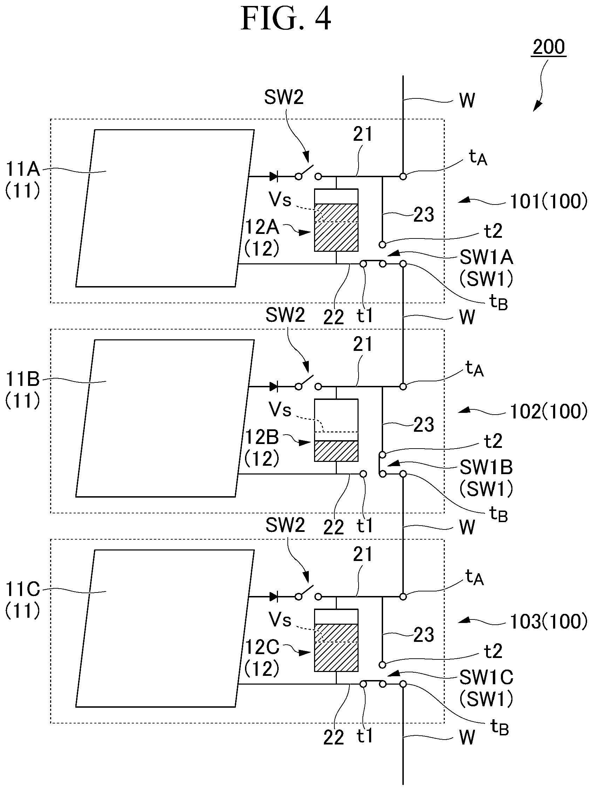

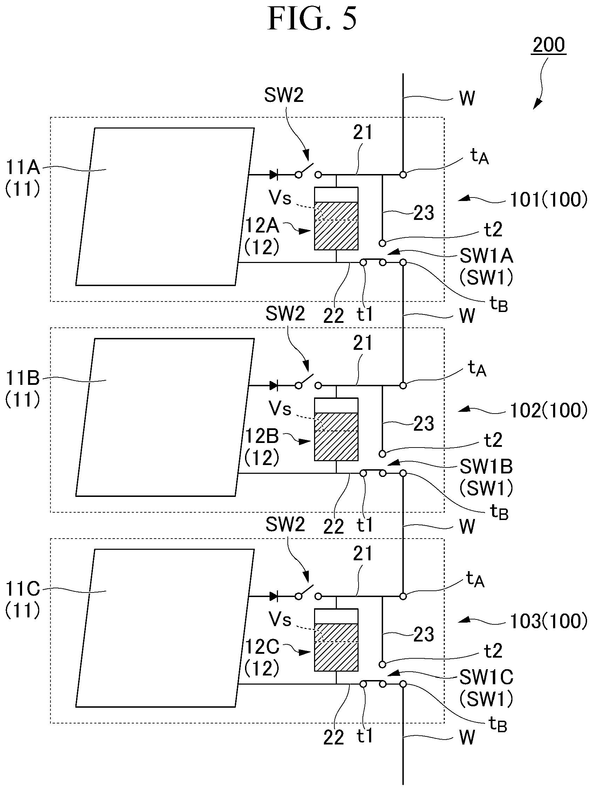

Next, an operation of the solar system 200 will be described. Figs. 4 and 5 are schematic diagrams for describing the operation of the solar system 200. In the power storage battery 12 in Figs. 4 and 5, an amount of charge of the power storage battery 12 is schematically represented with an area of a hatched portion occupying the inside of a rectangle shown in Figs. 4 and 5.

In Figs. 4 and 5, an example in which three units 100 are connected in series is shown. The three units 100 are referred to as a first unit 101, a second unit 102, and a third unit 103. The solar panel 11 of the first unit 101 is referred to as a first solar panel 11A, the power storage battery 12 thereof is referred to as a first power storage battery 12A, and the switching element SW1 thereof is referred to as a first switching element SW1A. The solar panel 11 of the second unit 102 is referred to as a second solar panel 11B, the power storage battery 12 thereof is referred to as a second power storage battery 12B, and the switching element SW1 thereof is referred to as a second switching element SW1B. The solar panel 11 of the third unit 103 is referred to as a third solar panel 11C, the power storage battery 12 thereof is referred to as a third power storage battery 12C, and the switching element SW1 thereof is referred to as a third switching element SW1C.

A case in which amounts of light radiated to the first solar panel 11A and the third solar panel 11C are larger than an amount of light radiated to the second solar panel 11B will be described as an example. The first solar panel 11A and the third solar panel 11C generate more power than the second solar panel 11B. Thus, amounts of charge of the first power storage battery 12A and the third power storage battery 12C are larger than an amount of charge of the second power storage battery 12B. As shown in Fig. 4, for example, the amounts of charge of the first power storage battery 12A and the third power storage battery 12C exceed a specified amount Vs and the amount of charge of the second power storage battery 12B is less than the specified amount Vs.

In this case, the first switching element SW1A and the third switching element SW1C are connected to the connection terminal t1. The current paths of the first unit 101 and the third unit 103 serve as the first current path. In the first unit 101 and the third unit 103, the first terminal $t_A$ and the second terminal $t_B$ are connected via the power storage battery 12. Power with which the power storage battery 12 is charged is externally output via the second terminal $t_B$. Although the switching element SW2 is open in Fig. 4, the switching element SW2 may be connected.

On the other hand, the second switching element SW1B is connected to the connection terminal t2. In the second unit 102, the first terminal $t_A$ and the second terminal $t_B$ are connected via the bypass wiring 23. The current path of the second unit 102 serves as the second current path. The second solar panel 11B and the second power storage battery 12B are separated from the output path of the solar system 200.

A difference of amounts of generated power between the first solar panel 11A and the third solar panel 11C is small and a difference of amounts of charge between the first power storage battery 12A and the third power storage battery 12C is small. That is, a difference between an amount of power capable of being output from the first unit 101 and an amount of power capable of being output from the third unit 103 is small. A time period required for the first unit 101 to be completely discharged and a time period required for the third unit 103 to be completely discharged are similar. That is, the solar system 200 can efficiently output power stored in the first unit 101 and the third unit 103 by discharging the first unit 101 and the third unit 103 for a prescribed time period.

Fig. 5 shows an operation of the solar system 200 after the elapse of a certain time period from Fig. 4. In Fig. 4, the second solar panel 11B and the second power storage battery 12B are separated from the output path of the solar system 200. On the other hand, the second power storage battery 12B is connected to the second solar panel 11B. The second power storage battery 12B is charged by the second solar panel 11B. An amount of charge of the second power storage battery 12B increases with the elapse of time and exceeds the specified amount Vs after the elapse of a prescribed time period (see Fig. 5).

In Fig. 4, the first unit 101 and the third unit 103 are discharged. Amounts of charge of the first power storage battery 12A and the third power storage battery 12C decrease with the elapse of time. An amount of charge of the second power storage battery 12B increases and amounts of charge of the first power storage battery 12A and the third power storage battery 12C decrease, so that differences of amounts of charge between the first power storage battery 12A, the second power storage battery 12B, and the third power storage battery 12C decrease (see Fig. 5). For example, amounts of charge of the first power storage battery 12A, the second power storage battery 12B, and the third power storage battery 12C are larger than or equal to the specified amount Vs after the elapse of a prescribed time period.

In this case, the first switching element SW1A, the second switching element SW1B, and the third switching element SW1C are all connected to the connection terminal t1. The current paths of the first unit 101, the second unit 102, and the third unit 103 all serve as the first current path.

Differences between amounts of power capable of being output by the first unit 101, the second unit 102, and the third unit are small. Therefore, the solar system 200 can efficiently output power stored in the first unit 101, the second unit 102, and the third unit 103.

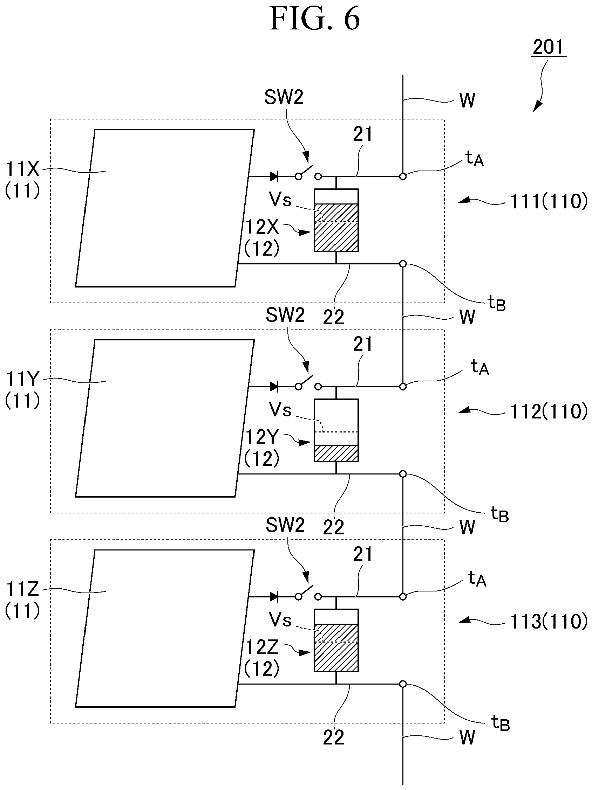

Fig. 6 is a schematic diagram for describing an operation of the solar system 201 according to a comparative example. In the power storage battery 12 in Fig. 6, as in Figs. 4 and 5, an amount of charge of the power storage battery 12 is schematically represented with an area of a hatched portion occupying the inside of a rectangle shown in Fig. 6.

In Fig. 6, an example in which three units 110 are connected in series is shown. The three units 110 are referred to as a first unit 111, a second unit 112, and a third unit 113. The three units 110 are different from the units 100 shown in Figs. 4 and 5 in that they do not include the switching element SW1 and the bypass wiring 23. The solar panel 11 of the first unit 111 is referred to as a first solar panel 11X, and the power storage battery 12 thereof is referred to as a first power storage battery 12X. The solar panel 11 of the second unit 102 is referred to as a second solar panel 11Y and the power storage battery 12 thereof is referred to as a second power storage battery 12Y. The solar panel 11 of the third unit 113 is referred to as a third solar panel 11Z and the power storage battery 12 thereof is referred to as a third power storage battery 12Z.

A case in which amounts of light radiated to the first solar panel 11X and the third solar panel 11Z are larger than an amount of light radiated to the second solar panel 11Y will be described as an example. It is assumed that the first solar panel 11X and the third solar panel 11Z generate more power than the second solar panel 11Y. Thus, amounts of charge of the first power storage battery 12X and the third power storage battery 12Z are larger than an amount of charge of the second power storage battery 12Y. As shown in Fig. 6, for example, the amounts of charge of the first power storage battery 12X and the third power storage battery 12Z exceed a specified amount Vs and the amount of charge of the second power storage battery 12Y is smaller than the specified amount Vs.

Differences of amounts of generated power between the first solar panel 11X and the third solar panel 11Z and the second solar panel 11Y are large. Also, differences of amounts of charge between the first power storage battery 12X and the third power storage battery 12Z and the second power storage battery 12Y is large. That is, differences between amounts of power capable of being output from the first unit 111 and the third unit 113 and an amount of power capable of being output from the second unit 112 are large. The second unit 112 is completely discharged faster than the first unit 111 and the third unit 113. If discharging is continued so that power stored in the first unit 111 and the third unit 113 is output, the second power storage battery 12Y of the second unit 112 becomes over-discharged. Over-discharging causes a failure of the second power storage battery 12Y. On the other hand, if amounts of discharge of the first unit 111 and the third unit 113 correspond to an amount of discharge of the second unit 112, most of the power stored in the first unit 111 and the third unit 113 cannot be output. A current that cannot be output causes exciton recombination in the first solar panel 11X and the third solar panel 11Z.

As described above, the solar system 200 according to the present embodiment can increase the power output efficiency by switching the current path with the switching element SW1. Also, it is possible to prevent over-discharging of the power storage battery 12 and the like and limit a failure.

Also, in the solar system 200 according to the present embodiment, if the maximum charging voltage $V_{max}$ of the power storage battery 12 is set with respect to the maximum output operating voltage $V_{pm}$ or the open-circuit voltage $V_{oc}$ of the solar panel 11, it is possible to charge the power storage battery 12 efficiently with power generated by the solar panel 11.

The I-V characteristics of the solar panel 11 (see Fig. 3) vary with an amount of sunshine. For example, the short-circuit current $I_{sc}$ increases when the amount of sunshine increases and the short-circuit current $I_{sc}$ decreases when the amount of sunshine decreases. When the solar panel 11 is controlled by a maximum power point tracking (MPPT) circuit, the MPPT circuit identifies power that becomes the maximum output while increasing the output voltage of the solar panel 11 and sets the optimum operating point p1. Power is calculated by the product of a voltage and a current. The short-circuit current $I_{sc}$ is constant when the amount of sunshine is constant, and the output power increases with an increase in the voltage and shows a maximum output at a certain value. The voltage at which the power becomes the maximum output is the maximum output operating voltage $V_{pm}$. When the amount of sunshine is constant, an amount of current does not vary with the amount of sunshine, so that the optimum operating point p1 can be appropriately specified.

On the other hand, if the amount of sunshine changes during the operation of the MPPT circuit, the amount of current will change separately from the increase in the voltage. As a result, the voltage at which the power becomes the maximum output may not match the maximum output operating voltage $V_{pm}$. For example, if the amount of sunshine increases at a voltage higher than that of the optimum operating point p1, the power output at that operating point may be greater than the power output at the optimum operating point p1. As a result, the MPPT circuit may misrecognize the optimum operating point p1 and misrecognize the voltage in the vicinity of the open-circuit voltage $V_{oc}$ as the maximum output operating voltage $V_{pm}$. In this case, because the voltage value is significantly lower than the maximum output operating voltage $V_{pm}$, the output power of the solar panel 11 is significantly reduced.

On the other hand, if the solar panel 11 and the power storage battery 12 are directly connected, a potential of the solar panel 11 is fixed by a potential of the power storage battery 12. The solar panel 11 operates at a voltage lower than or equal to the maximum charging voltage $V_{max}$ of the power storage battery 12. The maximum charging voltage $V_{max}$ is a value set by the power storage battery 12 and is not affected by a change in the amount of sunshine. The maximum charging voltage $V_{max}$ is set to a value less than or equal to a value which is 10% greater than the maximum output operating voltage $V_{pm}$. That is, a voltage value that is significantly lower than the maximum output operating voltage $V_{pm}$ is not misrecognized as the maximum charging voltage $V_{max}$ in the I-V characteristics. If the power storage battery 12 and the solar panel 11 are directly connected after the maximum charging voltage $V_{max}$ of the power storage battery 12 is set, the operating voltage of the solar panel 11 can be specified by the maximum charging voltage $V_{max}$ of the power storage battery 12 and a decrease in the output power of the solar panel 11 can be limited.

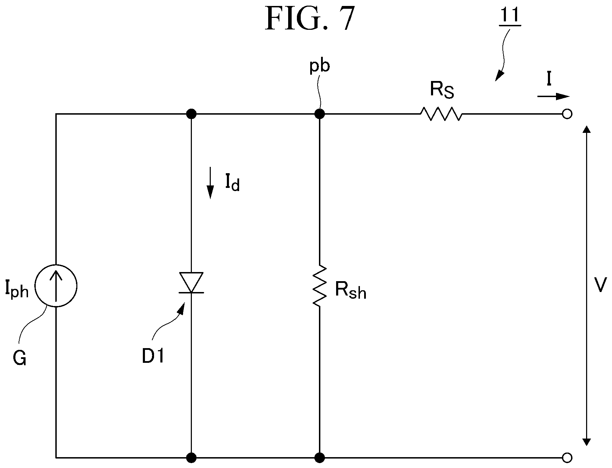

Also, Fig. 7 is an equivalent circuit diagram of the solar panel 11. The solar panel 11 is represented by a power generation unit G, a diode D1, a parallel resistor Rsh, and a series resistor $R_s$. The parallel resistor Rsh and the series resistor $R_s$ are parasitic resistors of the solar panel 11. Both ends of the solar panel 11 are connected to a load. The load in the unit 100 is the power storage battery 12.

An output current I output from the solar panel 11 is expressed by the following equation.

$$I = I_{ph} - I_d - (V + R_s I)/R_{sh} \ \dots \ (1)$$

In Eq. (1), $I_{ph}$ denotes a photoinduced current. $I_{ph}$ is generated when light is incident on the solar panel 11. In Eq. (1), $I_d$ is a diode current. Because each cell of the solar panel 11 is a diode having a p-n junction, the diode current is generated in accordance with the operating voltage. In Eq. (1), (V+RsI)/Rsh denotes a current flowing through the parallel resistor. In Eq. (1), $R_s$ denotes a resistance value of the series resistor, Rsh denotes a resistance value of the parallel resistor, and V denotes an output voltage.

Eq. (1) can be rewritten by the following Eq. (2).

$$I = (R_{sh}I_{ph} - R_{sh}I_d - V)/(R_s + R_{sh}) \ \dots \ (2)$$

In Eq. (2), $R_s + R_{sh}$ denotes parasitic resistance and can be regarded as a fixed value that does not change. Also, the output voltage V of the unit 100 is fixed by the maximum charging voltage $V_{max}$ of the power storage battery 12 and can be regarded as substantially a constant. Therefore, in Eq. (2), a part of $R_{sh}(I_{ph}-I_d)$ has an influence on a change in the output current I. A value of $R_{sh}(I_{ph}-I_d)$ becomes smaller when exciton recombination occurs.

Here, the resistance value of the power storage battery 12 is preferably smaller than the parallel resistor Rsh in the parasitic resistance (Rs+Rsh) of the solar panel 11. The resistance value of the power storage battery 12 is preferably 1/5 of the resistance value of the parallel resistor Rsh and more preferably 1/25 of the resistance value of the parallel resistor $R_{sh}$. For example, when the cathode active substance constituting the power storage battery 20 is a ternary compound or an iron olivine type, the resistance value of the power storage battery 20 becomes 1/5 to 1/25 of the resistance value of the parallel resistor $R_{sh}$.

When the resistance value of the power storage battery 12 and the resistance value of the parallel resistor Rsh satisfy the above relationship, most of the current reaching a branch portion pb flows externally instead of the parallel resistor Rsh side. When an amount of current flowing through the parallel resistor Rsh increases, the temperature of the solar panel 11 rises and the power generation efficiency of the solar panel 11 decreases. The decrease in the power generation efficiency of the solar panel 11 causes the decrease in the charging efficiency for the power storage battery 12. Also, the increase in the temperature of the solar panel 11 promotes the recombination of excitons (electrons and holes) in the power generation unit G. Exciton recombination causes a decrease in charging efficiency for the power storage battery 12.

That is, if the maximum charging voltage $V_{max}$ of the power storage battery 12 is set with respect to the maximum output operating voltage $V_{pm}$ or the open-circuit voltage $V_{oc}$ of the solar panel 11, the parameters that affect the output current I from the solar panel 11 can be limited. Also, by making the resistance value of the power storage battery 12 smaller than the resistance value of the parallel resistor $R_{sh}$, the current generated in the power generation unit G can externally flow efficiently and the recombination of excitons can be prevented. As a result, the power generation efficiency of the solar panel 11 can be increased, the charging efficiency of the power storage battery 12 can be increased, and the power storage battery 12 can be efficiently charged with the power generated by the solar panel 11.

Although preferred embodiments have been described in detail, the present invention is not limited to the embodiments and various modifications and changes can be made without departing from the scope and spirit of the present invention described in the claims.

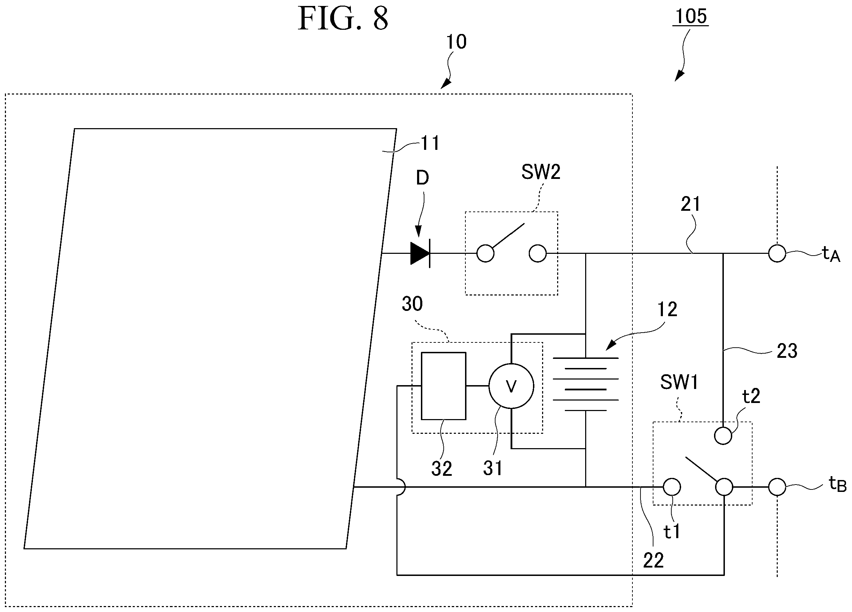

Fig. 8 is a schematic diagram in which one unit 105 of a solar system according to a first modified example is enlarged. The unit 105 according to the first modified example is different from the unit 100 shown in Fig. 2 in that the unit 105 includes a control part 30. Other configurations are similar, similar configurations are denoted by the same reference signs, and description thereof will be omitted.

The control part 30 is configured using a processor such as a CPU and a memory. The control part 30 operates as a measurement part 31 and an instruction part 32 when the processor executes a program. Also, all or some operations of the control part 30 may be implemented using hardware such as an application specific integrated circuit (ASIC), a programmable logic device (PLD), or a field programmable gate array (FPGA). The above program may be recorded on a computer-readable recording medium. The computer-readable recording medium is, for example, a flexible disk, a magneto-optical disk, a ROM, a CD-ROM, a portable medium such as a semiconductor storage device (for example, a solid-state drive (SSD), a hard disk built into a computer system, or a storage device such as a semiconductor storage device. The above program may be transmitted via a telecommunication circuit.

The control part 30 measures a voltage of a power storage battery 12 and switches a switching element SW1 in accordance with the voltage of the power storage battery 12. For example, the control part 30 operates as follows. The measurement part 31 measures an amount of charge of the power storage battery 12. For example, the measurement part 31 acquires an output signal from a voltmeter connected to the power storage battery 12 and converts the acquired signal into an industrial value indicating a voltage. The instruction part 32 controls the switching element SW1 in accordance with an amount of charge of the power storage battery 12 measured by the measurement part 31. For example, when the amount of charge of the power storage battery 12 does not reach a specified amount Vs, the instruction part 32 sets the switching element SW1 to a state in which the switching element SW1 is connected to a connection terminal t2. On the other hand, when the amount of charge of the power storage battery 12 exceeds the specified amount Vs, the instruction part 32 sets the switching element SW1 to a state in which the switching element SW1 is connected to a connection terminal t1.

Although an example of the voltage value is shown as a specific example of the value measured by the control part 30, any value may be used as long as it is a value related to a voltage, not a value of a voltage itself. That is, the control part 30 may measure another value that changes in accordance with the voltage of the power storage battery 12 and switch the switching element SW1 in accordance with the other value.

The solar system according to the first modified example can also increase the power output efficiency by switching the current path with the switching element SW1. Also, the control part 30 can automatically control the switching of the switching element SW1.

[Reference Signs List]

| | |
|---|---|
| 10 | Charging/discharging part |
| 11 | Solar panel |
| 12 | Power storage battery |
| 21 | First wiring |
| 22 | Second wiring |
| 23 | Bypass wiring |
| 30 | Control part |
| 100, 105, 110 | Unit |
| 200, 201 | Solar system |
| SW1, SW2 | Switching element |
| $t_A$ | First terminal |
| $t_B$ | Second terminal |

**Claims**

1. A solar unit comprising:

   a charging/discharging part in which a solar panel and a power storage battery are connected;

   two terminals connected to the charging/discharging part;

   a bypass wiring configured to connect the two terminals; and

   a switching element located at a connection portion between one of the two terminals and the bypass wiring,

   wherein the switching element switches between a first current path along which a current flows through the charging/discharging part and a second current path along which a current flows through the bypass wiring while bypassing the charging/discharging part.

2. The solar unit according to claim 1, further comprising a control part connected to the switching element, wherein the control part measures a value associated with a voltage of the power storage battery and causes the switching element to switch in accordance with the value associated with the voltage of the power storage battery.

3. The solar unit according to claim 1 or 2,

   wherein the solar panel and the power storage battery are directly connected in the charging/discharging part, and

   wherein a maximum discharging voltage of the power storage battery is less than or equal to a value which is 10% greater than a maximum output operation voltage of the solar panel.

4. A solar system comprising:

   a plurality of solar units according to any one of claims 1 to 3,

   wherein the solar units are connected to each other in series.

5. A method of controlling a solar unit, the method comprising:

   providing a plurality of charging/discharging parts in which a solar panel and a power storage battery are connected; and

   bypassing the charging/discharging parts when an amount of charge of the charging/discharging parts is less than a specified value.

6. A solar system control method using a solar system including a plurality of solar units according to any one of claims 1 to 3 or the solar system according to claim 4, the solar system control method including:

   setting the switching element to a state of the second current path when an amount of charge of the power storage battery is less than a specified value; and

setting the switching element to a state of the first current path when the amount of charge of the power storage battery reaches the specified value.

# FIG. 1

FIG. 2

# FIG. 3

# FIG. 4

# FIG. 5

# FIG. 6

# FIG. 7

FIG. 8

## INTERNATIONAL SEARCH REPORT

| International application No. |
| --- |
| PCT/JP2019/013621 |

A. CLASSIFICATION OF SUBJECT MATTER
Int. Cl. H02J7/35(2006.01)i, H02J7/02(2016.01)i

According to International Patent Classification (IPC) or to both national classification and IPC

B. FIELDS SEARCHED

Minimum documentation searched (classification system followed by classification symbols)
Int. Cl. H02J7/35, H02J7/02

Documentation searched other than minimum documentation to the extent that such documents are included in the fields searched
Published examined utility model applications of Japan    1922-1996
Published unexamined utility model applications of Japan  1971-2019
Registered utility model specifications of Japan          1996-2019
Published registered utility model applications of Japan  1994-2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>A | JP 2002-10520 A (CASIO COMPUTER CO., LTD.) 11 January 2002, paragraphs [0008]-[0015] (Family: none) | 5<br>1-4, 6 |
| A | JP 2006-287164 A (SHARP CORP.) 19 October 2006, paragraphs [0126]-[0141] (Family: none) | 1-6 |
| A | JP 7-250437 A (CANON INC.) 26 September 1995, paragraphs [0012]-[0043] (Family: none) | 1-6 |
| A | JP 2000-174308 A (TOSHIBA CORP.) 23 June 2000, paragraphs [0016]-[0025] (Family: none) | 1-6 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>16.04.2019 | Date of mailing of the international search report<br>07.05.2019 |
| --- | --- |
| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |

Form PCT/ISA/210 (second sheet) (January 2015)

**EP 3 952 056 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017060359 A